# EUROPÄISCHE PATENTSCHRIFT

(11) **EP 3 036 089 B1**
(45) Veröffentlichungstag und Bekanntmachung des Hinweises auf die Patenterteilung: **08.07.2020**
(21) Anmeldenummer: 14749848.9
(22) Anmeldetag: 11.08.2014
(51) Int. Cl.: B29C 70/38, B29B 11/16, B29C 70/20, B29L 31/30

(54) **VERFAHREN ZUR HERSTELLUNG EINES FASERVERSTÄRKTEN KUNSTSTOFFBAUTEILS**
METHOD FOR PRODUCING A FIBRE-REINFORCED PLASTICS COMPONENT
PROCÉDÉ DE FABRICATION D'UN COMPOSANT EN MATÉRIAU SYNTHÉTIQUE RENFORCÉ DE FIBRES

(30) Priorität: 23.08.2013 DE 102013216835
(43) Veröffentlichungstag der Anmeldung: 29.06.2016
(73) Patentinhaber: Volkswagen Aktiengesellschaft, 38440 Wolfsburg (DE)
(72) Erfinder: PLATH, Armin, 84028 Landshut (DE); TÄGER, Olaf, 38126 Braunschweig (DE); EHLEBEN, Max, 38126 Braunschweig (DE); KROLL, Lothar, 01324 Dresden (DE); HEINRICH, Hans-Jürgen, 09247 Röhrsdorf (DE); HELBIG, Frank, 04618 Göpfersdorf (DE); NENDEL, Wolfgang, 09569 Oederan/OT Schönerstadt (DE)
(86) Internationale Anmeldenummer: PCT/EP2014/067159
(87) Internationale Veröffentlichungsnummer: WO 2015/024806

(56) Entgegenhaltungen:
- EP-A2- 0 478 051
- DE-A1-102010 044 721

## Beschreibung

Die Erfindung betrifft ein Verfahren zur Herstellung eines faserverstärkten Kunststoffbauteiles nach dem Oberbegriff des Patentanspruches 1.

Ein gängiges Verfahren zur Herstellung eines faserverstärkten Kunststoffbauteils ist das sogenannte RTM-Verfahren (Resin-Transfer-Moulding). Bei einem solchen gattungsgemäßen RTM-Verfahren wird zunächst ein aus flächigen Faserhalbzeugen (zum Beispiel Fasergewebe) gebildeter Vorformling bereitgestellt. Der Vorformling befindet sich noch im Trockenzustand, das heißt noch ohne Matrixmaterial. Zur Fertigstellung des Kunststoffbauteils wird der Vorformling als ein Einlegerteil in eine Formkammer ausbildende Werkzeughälften eines RTM-Werkzeugs eingelegt. Anschließend wird die flüssige Ausgangskomponente des Matrixwerkstoffes unter Wärme und Druck in die Formkammer injiziert. Nach Aushärtung des Matrixwerkstoffes kann das fertiggestellte Kunststoffbauteil aus dem RTM-Werkzeug entnommen werden.

Der oben genannte Vorformling kann wie folgt hergestellt werden: So werden flächige Faserhalbzeuge in gängiger Praxis in Form von Rollenware definierter Breite von den Textilzulieferern bereitgestellt. Gewebte Faserhalbzeuge werden dabei mit Hilfe von Hochleistungswebmaschinen in einem kontinuierlichen Fertigungsprozess aus einer Endlos-Gewebebahn hergestellt. Die Endlos-Gewebebahn weist ein in der Fertigungsrichtung ausgerichtetes Kettfadensystem sowie ein in etwa rechtwinklig dazu verkreuztes Schussfadensystem auf. Sowohl das Kettfadensystem als auch Schussfadensystem weisen Verstärkungsfasern, etwa Kohlenstofffaserrovings, auf.

Aus der Rollenware werden Faserhalbzeug-Zuschnitte angefertigt, deren Kontur der Bauteilkontur entspricht. Die Zuschnitte werden zu einem Lagenpaket übereinander gestapelt, und zwar unter Zwischenlage eines Binders. Die übereinandergestapelten flächigen Halbzeuge können in gleicher und unterschiedlicher Faserorientierung angeordnet sein. Anschließend wird unter Druck und Wärme das noch lose Lagenpaket verfestigt und vorgeformt. Der so gebildete Vorformling kann dann weiter zum RTM-Werkzeug transportiert werden. Mittels des Binders wird gewährleistet, dass der Vorformling eine ausreichend große Bauteilstabilität für die Handhabung bis zum RTM-Prozess aufweist.

Durch das maßgenaue Zuschneiden der Faserhalbzeuge aus der Rollenware (entsprechend der Preform-Kontur) ergibt sich ein erheblicher Verschnitt, der als Materialausschuss aus dem Prozesskreislauf abgeführt werden muss und sich negativ auf die Kosten- und Umweltbilanz des gesamten Fertigungsprozesses auswirkt.

Aus der DE 199 52 443 A1 ist ein Verfahren von ebenen, maßgenauen und nicht ausfransenden Faser-Halbzeugen für die Herstellung von Faser-Kunststoff-Verbundbauteilen bekannt. Um ein Ausfransen der Faserhalbzeuge zu vermeiden, werden die, die Bauteilgeometrie nachbildenden Flächengebilde einer Endlos-Bahn an ihrer Außenkontur mit Hilfe einer Mehrfach-Naht abgenäht und anschließend entlang dieser Mehrfach-Naht ausgeschnitten. Aus der DE 100 05 202 A1 ist ein weiteres Verfahren zur Herstellung eines Faserhalbzeugs für Faser-Kunststoff-Verbundbauteile bekannt, bei dem Faserbündel auf eine Legeeinheit abgelegt und durch beliebig orientierte Nähte fixiert werden. Die Nähte stellen die Bauteilendkontur dar.

Aus der DE 10 2010 044 721 A1 ist ein gattungsgemäßes Verfahren zur Herstellung eines faserverstärkten Kunststoffbauteils bekannt. Aus der EP 0 478 051 A2 ist ein weiteres Verfahren zur Herstellung eines faserverstärkten Kunststoffbauteils bekannt.

Die Aufgabe der Erfindung besteht darin, ein Verfahren zur Herstellung eines faserverstärkten Kunststoffbauteils bereitzustellen, bei dem der Materialaufwand bei den Verstärkungsfasern reduziert ist.

Die Aufgabe ist durch die Merkmale des Patentanspruches 1 gelöst. Bevorzugte Weiterbildungen der Erfindung sind in den abhängigen Ansprüchen offenbart.

Erfindungsgemäß wird das Faserhalbzeug wie folgt hergestellt: So werden Endlos-Verstärkungsfäden auf einer in einer Förderrichtung kontinuierlich geförderten Endlos-Trägerbahn parallel zur Förderrichtung abgelegt und fixiert. Die Endlos-Verstärkungsfäden werden derart auf der Endlos-Trägerbahn abgelegt und fixiert, dass sich ein Flächengebilde ergibt, dessen Kontur der Endkontur des Kunststoffbauteils entspricht.

Als Grundlage für die spätere Ablage der Verstärkungsfäden kann die Endlos-Trägerbahn eine biegeschlaffe quasi endlose Bahnware sein. Diese kann aus einem textilen Vlies, einem textilen Gitter (mit größeren Gitterabständen, etwa 1-5mm) oder auch aus einer Folie bestehen. Das Material der Bahnware kann aus dem gleichen Material wie die Verstärkungsfäden sein oder auch ein Thermoplast wie etwa Polyamid, Polypropylen oder auch ein anderes sein. Die Bahnware gewährleistet eine Grundstruktur und Fixierung der darauf abgelegten Verstärkungsfäden über einen Nähfaden, der das Gitter durchstößt. Ist die Bahnware aus thermoplastischem Material, so kann es im späteren Formgebungsprozess aufschmelzen und sich mit der umgebenden, idealerweise aus dem gleichen Thermoplast bestehenden, Matrix verbinden. Ferner kann die Bahnware in Form eines Vlieses für nachgelagerte Injektionsprozesse als Fließhilfe dienen.

Die Endlos-Verstärkungsfäden können aus Kohlenstoff-, Glas-, Aramid- und Basaltfasern gefertigt sein, oder auch aus hybriden Fäden, etwa aus Thermoplast und Kohlenstoff oder Glas. Die Endlos-Verstärkungsfäden werden auf dem Gitter durch maschenbildende Fadensysteme kraftschlüssig oder auch durch gezielte, lokale oder vollständig umschließende Einbettung in Kunststoffen stoffschlüssig fixiert, so dass abschließend ein Faser-Gelege entsteht. Der Vorschub und die Fadenzuführung werden dabei so gestaltet, dass die sequentielle Ablage der nebeneinander zugeführten Verstärkungsfäden an vordefinierten Stellen entlang der Förderrichtung der Endlos-Trägerbahn unterbrochen werden und an ebenfalls vordefinierten Stellen wieder aufgenommen werden kann. Die Positionen der Fadenablage-Unterbrechung bzw. der Faden-Wiederablage können über die gesamte Breite der Preform (y-Richtung) variiert werden, so dass in der x/y-Ebene Ausschnitte ohne Verstärkungsfäden beliebiger Kontur und auch Randbereiche ohne Verstärkungsfäden beliebiger Kontur in einem kontinuierlichen Ablageprozess entstehen können. Die Fäden werden dabei zunächst in Einzelschichten parallel zur Förderrichtung (0°-Richtung) abgelegt. Durch die Verwendung von Fasern unterschiedlicher Fasertiter, die vor dem Ablegen auf dem Traggitter in vorher genau definiertem Ausmaß gespreizt (Kohlenstofffasern) und entlang der Breite des Traggerüstes (y-Richtung) in variabler Form mit Fixierungsfäden versehen werden, können unterschiedliche Flächengewichte der NNP erzeugt werden.

Die Ablage von Endlos-Verstärkungsfasern mit einer beliebigen Winkelorientierung (ϕ >0°) zur Förderrichtung der kontinuierlich zugeführten Bahnware kann dadurch realisiert werden, dass die Bauteilkontur mit allen Ausschnitten, die die Positionen zur Fadenablage-Unterbrechnung und zur Faden-Wiederablage festlegt, um den entsprechenden Winkel ϕ zur Förderrichtung gedreht (x- bzw. 0°-Richtung) wird. Dadurch kann weiterhin in x-Richtung gefördert werden. Die durch die Drehung der Bauteilkontur entstehende zusätzliche Breite an textiler Fadenablage ist in der Breite der Endlos-Trägerbahn entsprechend vorzuhalten.

Die Ablage der Endlos-Verstärkungsfäden auf dem Traggitter (das heißt der Endlosträgerbahn) wird über eine Textilmaschine gesteuert, die eine vorher definierte Kontur entlang der Breite der Bahnware (y-Richtung) abfährt. Durch Variation der Fadenablage-Unterbrechung und Faden-Wiederablage in der Querrichtung können so entlang der Breite der als Traggerüst fungierenden Endlos-Trägerbahn gleichzeitig verschiedene Preform-Konturen mit den Verstärkungsfäden erzeugt werden. Durch eine flächenoptimale Anordnung der Preform-Konturen über der Traggerüstbreite können so gleichzeitig verschiedene Preformen mit minimalem Verschnitt des Traggerüstes hergestellt werden.

Die Endlos-Trägerbahn als textiles Traggerüst kann bereits aus Verstärkungsfäden (zum Beispiel Glasfasern) ausgeführt sein. Wird für die Ablage der Verstärkungsfäden eine andere Art von Material (zum Beispiel Kohlenstofffasern) verwendet, entsteht über der Schichtdicke der Preform eine zweischichte hybride Verstärkungsstruktur (zum Beispiel Glas- und Kohlenstofffasern). Wenn entlang der Traggerüstbreite (y-Richtung) eine spiegelsymmetrische Ablage der Preform-Konturen erfolgt, können nach Beendigung der Ablage der Verstärkungsfäden und nach Ausschneiden der Preformen diese übereinandergelegt werden, so dass eine über der Schichtdicke hybride, mehrschichtige Gesamt-Preform aus verschiedenen Materialien entsteht, zum Beispiel eine Sandwichstruktur.

Die gemäß Vorbeschreibung hergestellten Gitter (das heißt Endlos-Trägerbahn) mit darauf abgelegten, kraft- oder stoffschlüssig fixierten Verstärkungsfäden können mit geeigneten Maschinen jeweils entlang der Bauteilkontur ausgeschnitten werden. Da sich nur innerhalb der Bauteilkontur auch Verstärkungsfäden befinden, entsteht durch das Ausschneiden aus der Bahnware nahezu kein Abfall an Verstärkungsfäden. Die ausgeschnittenen Bauteilkonturen können in einem nachgelagerten "Preforming"-Schritt entweder bebindert und aufeinandergelegt oder aufeinandergelegt und textiltechnisch fixiert werden, so dass ein Mehrlagenaufbau aus Einzellagen verschiedener Verstärkungsfaden-Orientierungen entsteht.

Auf eine sich kontinuierlich oder diskontinuierlich bewegte Trägerbahn aus Vlies, Gewebe- oder Gewirkegitter, Folie etc. werden gleichzeitig konturgerecht mindestens zwei oder mehrere Rovingabschnitte aus Carbon-, Glas-, Basalt- Aramid-Fasern etc. synchron zur Trägerbahn zugeführt, nebeneinander abgelegt und fixiert.

Der Roving kann dabei von einem Gatter oder bereits vorbereitet von einer Scheibenspule bereitgestellt werden.

Die Rovingmaterialien können dabei unterschiedliche Feinheiten aufweisen (zum Beispiel 12K, 24K, 50K oder größer).

Bei der Direktverarbeitung von Rovings sind diese auf ein vorbestimmtes Flächengewicht und eine vorbestimmte Breite aufzuspreizen. Dieser Vorgang erfolgt online mit dem Verlegeprozess.

Wird mit Scheibenspulen gearbeitet, sind die Rovings vorher durch einen Aufspreizprozess auf die jeweilige Brite und auf das jeweilige Flächengewicht zu bringen.

Jeder Roving der Rovingschar ist dabei durch geeignete Mitteln einzeln zueinander bewegbar, positionierbar und ablängbar und zu jedem Zeitpunkt wieder anarbeitbar je nach Bauteilkontur. Ort- und Zeitpunkt des sequentiellen Trennens der einzelnen Verstärkungsfäden aus ihrer Verarbeitung mit der kontinuierlich zugeführten Bahnware sowie deren sequentieller Wiedereinarbeitung in den Warenfluss erfolgt gesteuert resultierend aus der Geschwindigkeit der Bahnware über die jeweils vorgegebene Preformgeometrie und deren jeweiliger Ausrichtung über der Bahnware. Die einzelnen Rovings sind dabei so anzuordnen, dass eine gegenseitige Beeinflussung ausgeschlossen wird und dennoch eine lückenlose Ablagefläche erreicht werden kann.

Das Fixieren auf der Trägerbahn kann dabei über Kleber, Nähfäden, thermisch etc. erfolgen.

Gemäß einer Ausführungsform kann die Endlos-Trägerbahn als Wickel bereitgestellt und im gespannten Zustand über ein synchron mitlaufendes Transportband bewegt werden. Oberhalb der Trägerbahn befinden sich die Rovingablaufstellen als gebremste Scheibenspulen in zwei Ebenen, jeweils um eine Rovingteilung versetzt. Jeder Roving besitzt ein separates Zugwerk zur Einzelrovingförderung und eine separat ansteuerbare Schneideinrichtung.

Je Roving ist ein mechanisches oder pneumatisches Hilfselement angeordnet, das den Roving zum Anarbeiten unter einer Belastungswalze, Stab oder Band auf die Trägerbahn fixiert. An einer nachgeschalteten Vielnadelnähstelle wird die aufgelegte Rovingschar mittels Nähfäden auf dem Trägermaterial fixiert. Anschließend werden die so gebildeten Bauteilabschnitte mittels Längs- und Querschneideinrichtungen durch Trennen der Trägerbahn vereinzelt.

Bei Verwendung einer thermoplastischen Bahnware ist eine Fixierung von Hybridfasern, bestehend aus Glas- oder Kohlenstofffasern und thermoplastischen Fasern, auch durch ein thermisches Fügen, zum Beispiel mit Ultraschall, Laser, Flamme etc. möglich.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.
Es zeigen:
- Fig. 1: in einer perspektivischen Ansicht einen Vorformling für ein flächiges Faser-Verbundkunststoff-Bauteil;
- Fig. 2: in einer Teilansicht von oben eine Endlos-Trägerbahn mit darauf abgelegten Endlos-Verstärkungsfäden, die jeweils Flächengebilde unterschiedlicher Faserorientierung bilden;
- Fig. 3: in einer weiteren schematischen Explosionsdarstellung ein angedeutetes Formwerkzeug, in das die aus der Endlos-Trägerbahn zugeschnittenen Faser-Halbzeuge zur Bildung eines Lagenpaketes gestapelt werden; und
- Fig. 4: in einer schematischen perspektivischen Darstellung eine Vorrichtung zur Erzeugung von Faserhalbzeugen.

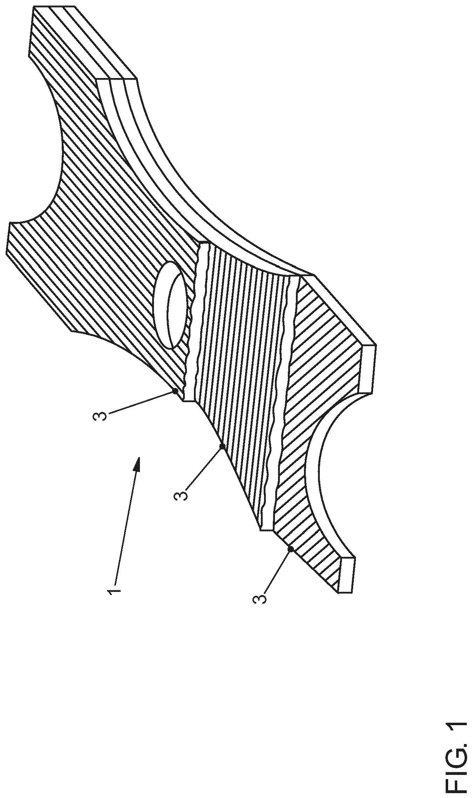

In der Fig. 1 ist vereinfacht ein Vorformling 1 gezeigt, der beispielsweise zur Herstellung eines Karosseriebauteils für ein Kraftfahrzeug, wie etwa einem Kotflügel, etc. nach dem RTM-Verfahren (Resin Transfer Moulding) oder einem ähnlichen Verfahren verwendet wird. Der Vorformling 1 ist aus drei übereinandergestapelten, später beschriebenen Faserhalbzeug-Zuschnitten 3 aufgebaut, deren Kontur mit der Endkontur des nicht dargestellten Kunststoffbauteils identisch ist.

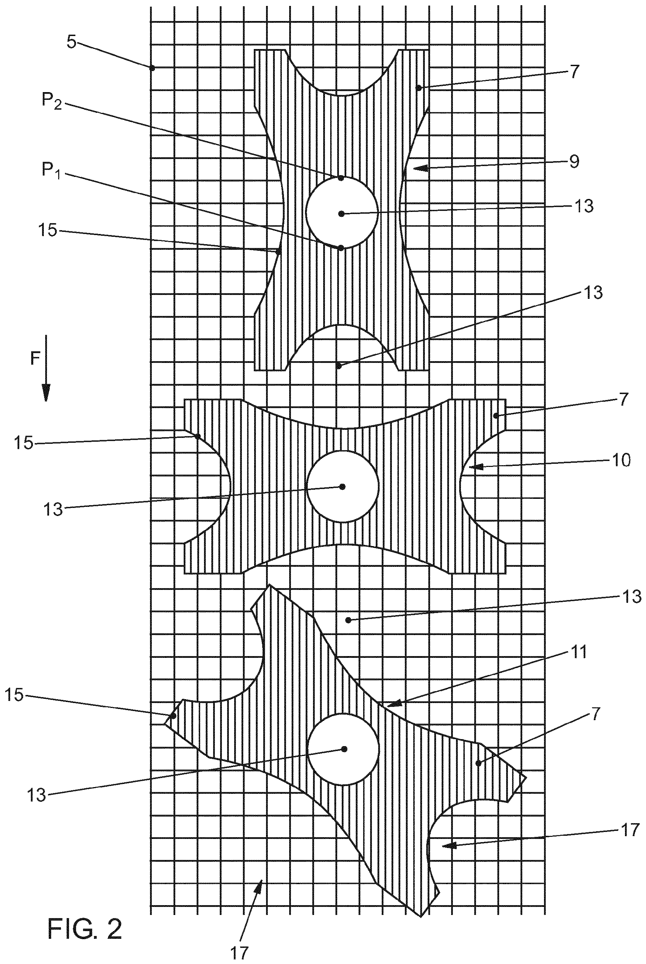

Anhand der nachfolgenden Figuren 2 bis 4 ist die Herstellung des Vorformlings 1 erläutert: So ist in der Fig. 2 in einer Teilansicht eine Endlos-Trägerbahn 5 gezeigt. Die Endlos-Trägerbahn 5 ist im gezeigten Ausführungsbeispiel eine biegeschlaffe Bahnware aus einem textilen Gitter. Die Endlos-Trägerbahn 5 gewährleistet eine Grundstruktur, auf der die Endlos-Verstärkungsfäden 7 parallel zur Förderrichtung F abgelegt und fixiert sind. Die Endlos-Verstärkungsfäden 7 sind dabei so angeordnet, dass sie in ihrer Gesamtheit Flächengebilde 9, 10, 11 ergeben, deren Kontur der Endkontur des herzustellenden Kunststoffbauteils entspricht.

Wie aus der Fig. 2 hervorgeht, sind die einzelnen Flächengebilde 9, 10, 11 flächen- und konturgleich, jedoch in unterschiedlicher Ausrichtung auf der Endlos-Trägerbahn 5 positioniert, wodurch die Verstärkungsfasern 7 in unterschiedlicher Ausrichtung im jeweiligen Flächengebilde 9, 10, 11 abgelegt und fixiert sind. Die Flächengebilde 9, 10, 11 sind in der Förderrichtung F betrachtet über Flächenausschnitte 13 ohne Endlos-Verstärkungsfäden 7 voneinander beabstandet. Zudem weist auch jedes der Flächengebilde 9 bis 11 weitere kreisförmige Flächenausschnitte 13 auf, die frei von Endlosverstärkungsfäden 7 sind.
Nach Erzeugung der Flächengebilde 9 bis 11 auf der Endlos-Trägerbahn 5 erfolgt ein Zuschneiden, bei dem die Flächengebilde 9 bis 11 als Faserhalbzeug-Zuschnitte 3 aus der Endlos-Trägerbahn 5 geschnitten werden. In der Fig. 2 sind die Zuschnittkanten 15 mit durchgezogenen Linien angedeutet. Die nach dem Zuschneiden verbleibenden Verschnittflächenanteile 17 werden als Materialausschuss aus dem Prozesskreislauf abgeführt. Die Zuschnittkanten 15 der Faser-Halbzeug-Zuschnitte 3 verlaufen entlang der Konturkanten der Flächengebilde 9, 10, 11, wodurch sich im Verschnittflächenanteil 17 ausschließlich das textile Gitter der Endlos-Trägerbahn 5 wiederfindet, nicht jedoch die Endlos-Verstärkungsfäden 7.

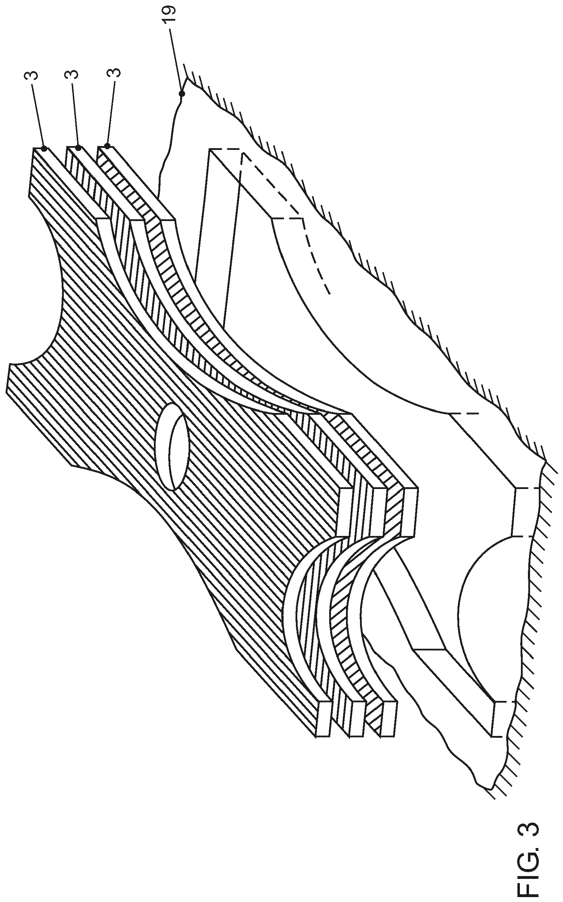

Die so erhaltenen Faserhalbzeug-Zuschnitte 3 werden in der Fig. 3, insbesondere unter Zwischenlage eines Binders, in ein Formwerkzeug 19 zu einem Lagenpaket übereinandergestapelt. In dem Lagenpaket weisen die übereinandergestapelten FaserHalbzeuge 3 unterschiedliche Verstärkungsfaser-Orientierungen auf.

Anschließend wird unter Druck und Wärme das noch lose im Formwerkzeug 19 angeordnete Lagenpaket verfestigt und gegebenenfalls dreidimensional vorgeformt. Der so gebildete Vorformling 1 ist in der Fig. 1 gezeigt. Nach der Druck- und Wärmebeaufschlagung weist der Vorformling 1 eine ausreichend große Bauteilstabilität auf, die einen prozesssicheren Weitertransport in die Formkammer eines nicht dargestellten RTM-Werkzeugs gewährleistet. In der Formkammer des RTM-Werkzeugs wird der Vorformling 1 als ein Einlegerteil eingelegt. Anschließend wird in an sich bekannter Weise eine flüssige Ausgangskomponente des Matrixwerkstoffes unter Druck und Wärme in die Formkammer eingespritzt. Nach Aushärtung des Matrixwerkstoffes kann dann das fertiggestellte Kunststoffbauteil aus dem RTM-Werkzeug entnommen werden.

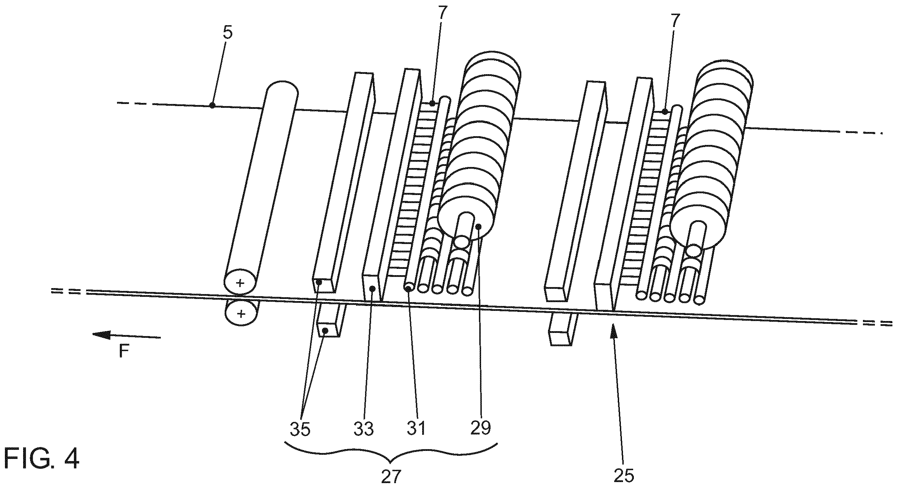

In der Fig. 4 ist eine Vorrichtung zur Herstellung der Faserhalbzeug-Zuschnitte 3 schematisch angedeutet. Demzufolge wird die Träger-Endlosbahn 5 in der Fertigungsrichtung F mit einer kontinuierlichen Fördergeschwindigkeit in der Förderrichtung F gefördert, und zwar über eine Förderstrecke zwischen einer nicht dargestellten Abwickelrolle bis zu einer Aufwickelrolle. In der Förderrichtung F hintereinandergeschaltet sind über die Förderstrecke verteilt eine erste Ablagestation 27 und eine zweite Ablagestation 25 grob schematisch angedeutet, über die jeweils Verstärkungsfäden 7 auf der Endlos-Trägerbahn 5 ablegbar sind. Jeder der beiden Ablagestationen 25, 27 weist eine Reihe von quer über die Endlos-Trägerbahn 5 sowie koaxial zueinander angeordneten Scheibenspulen 29 auf, auf denen jeweils die Endlos-Verstärkungsfäden 7 aufgewickelt sind. Diese werden über ein Rollensystem 31 mit einer vorgegebenen Ablagegeschwindigkeit auf die Endlos-Trägerbahn 5 abgelegt. Die Ablagegeschwindigkeit ist dabei in etwa identisch mit der Fördergeschwindigkeit der Endlos-Trägerbahn 5. Den Scheibenspulen 29 vorgelagert ist eine Schneidstation 33 sowie ein Nähwerk 35. In der Förderrichtung F nach der zweiten Ablagestation 27 folgt eine nicht dargestellte Zuschnittstation, in der die Flächengebilde 9, 10, 11 entlang der Zuschnittkanten 15 aus der Endlos-Trägerbahn 5 ausgeschnitten werden.

Zur Bildung der oben erwähnten Flächenausschnitte 13 ohne die Endlos-Verstärkungsfäden 7 wird der jeweilige, von der Scheibenspule 29 abgewickelte Endlos-Verstärkungsfaden 7 an einer vordefinierten Position P1 (beispielhaft in der Fig. 2 gezeigt) für eine Fadenablage-Unterbrechung von der Schneidstation 33 abgelängt. Gleichzeitig wird die Zuführung des abgelängten Endlos-Verstärkungsfaden 7 unterbrochen, und zwar unter Weiterförderung der Endlos-Trägerbahn 5 mit der Fördergeschwindigkeit. An einer vordefinierten, in der Förderrichtung F nacheilenden Position P2 (beispielhaft in der Fig. 2 gezeigt) erfolgt dann eine Faden-Wiederablage, bei der der unterbrochene Endlos-Verstärkungsfaden 7 wieder auf die Endlos-Trägerbahn 5 abgelegt und fixiert wird.

## Patentansprüche

1. Verfahren zur Herstellung eines faserverstärkten Kunststoffbauteils, bei dem ein Vorformling (1) aus zumindest einem Faserhalbzeug (3) bereitgestellt wird und bei dem Endlos-Verstärkungsfäden (7) auf einer in einer Förderrichtung (F) kontinuierlich geförderten Endlos-Trägerbahn (5) parallel zur Förderrichtung (F) abgelegt und fixiert werden, wobei die Endlos-Verstärkungsfäden (7) derart auf der Endlos-Trägerbahn (5) abgelegt und fixiert werden, dass sich eine Reihe von Flächengebilden (9, 10, 11) ergibt, deren Kontur der Endkontur des Kunststoffbauteils entspricht, **dadurch gekennzeichnet, dass** nach der Herstellung des jeweiligen Flächengebildes (9, 10, 11) ein Zuschneiden erfolgt, bei dem jedes Flächengebilde (9, 10, 11) als ein Faserhalbzeug-Zuschnitt (3) aus der Endlos-Trägerbahn (5) geschnitten wird, und zwar unter Abführung eines verbleibenden Verschnittflächenanteils (17) als Materialausschuss, und dass die Zuschnittkanten (15) des jeweiligen Faserhalbzeug-Zuschnitts (3) konturangepasst entlang des Randes des jeweiligen Flächengebildes (9, 10, 11) verlaufen, so dass sich im Verschnittflächenanteil (17) ausschließlich das textile Gitter der Endlos-Trägerbahn (5) wiederfindet, nicht jedoch die Endlos-Verstärkungsfäden (7), und dass die Reihe von Flächengebilden (9, 10, 11) zu einem Lagenpaket gestapelt wird.

2. Verfahren nach Anspruch 1, **dadurch gekennzeichnet, dass** zur Bildung eines Flächenausschnittes (13) ohne Endlos-Verstärkungsfäden (7) der jeweilige Verstärkungsendlosfaden (7) an einer vordefinierten Position (P1) für eine Fadenablage-Unterbrechung abgelängt wird, und an einer vordefinierten, in der Förderrichtung (F) nacheilenden Position (P2) für eine Faden-Wiederablage wieder auf der Endlos-Trägerbahn (5) abgelegt und fixiert wird.

3. Verfahren nach einem der vorhergehenden Ansprüche, **dadurch gekennzeichnet, dass** die Endlos-Verstärkungsfäden (7) durch maschenbildende Fadensysteme (5) fixiert werden, oder dass die Endlos-Verstärkungsfäden (7) durch gezielte, lokale oder vollständig umschließende thermische Einbettung oder Verklebung in der Endlos-Trägerbahn (5) stoffschlüssig fixiert werden.

4. Verfahren nach einem der vorhergehenden Ansprüche, **dadurch gekennzeichnet, dass** zur Anpassung des Flächengewichts des Faserhalbzeugs (3) Endlos-Verstärkungsfäden (7) mit unterschiedlichen Faserdurchmessern verwendet werden, und/oder dass die Endlos-Verstärkungsfäden (7) vor dem Ablegen auf der Endlos-Trägerbahn (5) definiert gespreizt werden.

5. Verfahren nach einem der vorhergehenden Ansprüche, **dadurch gekennzeichnet, dass** die übereinandergestapelten Flächengebilde (9, 10, 11) unterschiedliche Verstärkungsfaden-Orientierungen aufweisen.

6. Verfahren nach Anspruch 5, **dadurch gekennzeichnet, dass** die Flächengebilde (9, 10, 11) zur Bereitstellung unterschiedlicher Verstärkungsfaden-Orientierungen in unterschiedlicher Ausrichtung auf der Endlos-Trägerbahn (5) abgelegt werden, und/oder dass das noch lose Lagenpaket unter Druck und Wärme verfestigt und vorgeformt wird, und insbesondere der so gebildete Vorformling (1) weiter in eine Formkammer eines Injektionswerkzeugs (19) eingelegt, und anschließend ein Matrixmaterial unter Wärme und Druck in die Formkammer injiziert und ausgehärtet wird.

7. Verfahren nach einem der vorhergehenden Ansprüche, **dadurch gekennzeichnet, dass** die Endlos-Trägerbahn (5) ein textiles Vlies, ein textiles Gitter oder eine Folie ist, und/oder dass die Endlos-Trägerbahn (5) aus Thermoplast, etwa Polyamid oder Polypropylen, gefertigt ist.

8. Verfahren nach einem der vorhergehenden Ansprüche, **dadurch gekennzeichnet, dass** die Endlos-Trägerbahn (5) ebenfalls Verstärkungsfäden (7) aufweist, etwa aus Glasfasern, wodurch nach der Ablage der Endlos-Verstärkungsfäden eine zweischichtige Verstärkungsstruktur entsteht.

## Claims

1. Process for the production of a fibre-reinforced plastics component in which a preform (1) made of at least one semifinished fibre product (3) is provided, and in which continuous reinforcement filaments (7) are laid and fixed parallel to the conveying direction (F) on a continuous carrier web (5) conveyed continuously in a conveying direction (F), where the continuous reinforcement filaments (7) are laid and fixed on the continuous carrier web (5) in a manner that produces a series of areal structures (9, 10, 11), the outline of which corresponds to the final outline of the plastics component, **characterized in that** after the production of the respective areal structure (9, 10, 11) a cutting-to-size procedure takes place in which each areal structure (9, 10, 11) in the form of a cut-to-size semifinished fibre product (3) is cut out of the continuous carrier web (5), and specifically with removal of a remaining offcut area (17) as waste material, and that the cut-to-size edges (15) of the respective cut-to-size semifinished fibre product (3) run along the periphery of the respective areal structure (9, 10, 11) in accordance with the outline, and therefore the offcut area (17) then comprises exclusively the textile mesh of the continuous carrier web (5), and not the continuous reinforcement filaments (7), and that the series of areal structures (9, 10, 11) is stacked to produce a layer package.

2. Process according to Claim 1, **characterized in that**, for the formation of an areal cut out (13) without continuous reinforcement filaments (7), the respective continuous reinforcement filament (7) is cut across its length at a predefined position (P1) for an interruption of filament-laying and, at a predefined position (P2) downstream in the conveying direction (F), for a resumption of filament-laying, is again laid and fixed on the continuous carrier web (5).

3. Process according to either of the preceding claims, **characterized in that** the continuous reinforcement filaments (7) are fixed via loop-forming filament systems (5), or that the continuous reinforcement filaments (7) are fixed coherently in the continuous carrier web (5) via controlled, local or completely enclosing thermal embedment or adhesive bonding.

4. Process according to any of the preceding claims, **characterized in that** continuous reinforcement filaments (7) with different fibre diameters are used for appropriate adjustment of the weight per unit area of the semifinished fibre product (3), and/or that, before laying on the continuous carrier web (5), the continuous reinforcement filaments (7) are spread in defined fashion.

5. Process according to any of the preceding claims, **characterized in that** the areal structures (9, 10, 11) stacked on top of one another have different reinforcement-filament orientations.

6. Process according to Claim 5, **characterized in that** the areal structures (9, 10, 11) are laid in different orientation on the continuous carrier web (5) in order to provide different reinforcement-filament orientations, and/or that the layer package, not yet consolidated, is consolidated and preformed with exposure to heat and pressure, and in particular the resultant preform (1) is further placed into a moulding chamber of an injection mould (19), and then a matrix material is injected, with exposure to heat and pressure, into the moulding chamber and is hardened.

7. Process according to any of the preceding claims, **characterized in that** the continuous carrier web (5) is a textile nonwoven, a textile mesh or a film, and/or that the continuous carrier web (5) has been manufactured from thermoplastic, for example polyamide or polypropylene.

8. Process according to any of the preceding claims, **characterized in that** the continuous carrier web (5) likewise comprises reinforcement filaments (7), for example made of glass fibres, and laying of the continuous reinforcement filaments thus produces a two-layer reinforcement structure.

## Revendications

1. Procédé de fabrication d'un composant en matière plastique renforcé par des fibres, selon lequel une préforme (1) est préparée à partir d'au moins un semi-fini fibreux (3) et selon lequel des fils de renfort sans fin (7) sont déposés et fixés sur une bande de support sans fin (5), déplacée en continu dans une direction de déplacement (F), parallèlement à la direction de déplacement (F), les fils de renfort sans fin (7) étant déposés et fixés sur la bande de support sans fin (5) de telle sorte qu'une série de structures plates (9, 10, 11) soit obtenue, dont le contour correspond au contour d'extrémité du composant en matière plastique, **caractérisé en ce qu'**après la fabrication de la structure plate respective (9, 10, 11), une découpe a lieu, lors de laquelle chaque structure plate (9, 10, 11) est découpée en tant que coupe de semi-fini fibreux (3) à partir de la bande de support sans fin (5), et ce avec déchargement d'une proportion de surface de chute restante (17) en tant que rebut de matériau, et **en ce que** les bords de coupe (15) de la coupe de semi-fini fibreux respective (3) passent de manière adaptée au contour le long du bord de la structure plate respective (9, 10, 11), de telle sorte qu'exclusivement le réseau textile de la bande de support sans fin (5) se retrouve dans la proportion de surface de chute (17), mais toutefois pas les fils de renfort sans fin (7), et **en ce que** la série de structures plates (9, 10, 11) est superposée en un paquet de couches.

2. Procédé selon la revendication 1, **caractérisé en ce que**, pour former une échancrure de surface (13) sans fils de renfort sans fin (7), le fil sans fin de renfort (7) est sectionné à une position prédéfinie (P1) pour une interruption du dépôt de fils, et de nouveau déposé et fixé sur la bande de support sans fin (5) à une position prédéfinie (P2), en retard dans la direction de déplacement (F), pour un nouveau dépôt de fils.

3. Procédé selon l'une quelconque des revendications précédentes, **caractérisé en ce que** les fils de renfort sans fin (7) sont fixés par des systèmes de fils formant des mailles (5) ou **en ce que** les fils de renfort sans fin (7) sont fixés par accouplement de matière dans la bande de support sans fin (5) par intégration thermique ou collage ciblé, local ou complètement enveloppant.

4. Procédé selon l'une quelconque des revendications précédentes, **caractérisé en ce que**, pour l'adaptation du poids superficiel du semi-fini fibreux (3), des fils de renfort sans fin (7) ayant différents diamètres de fibres sont utilisés, et/ou **en ce que** les fils de renfort sans fin (7) sont déployés de manière définie avant le dépôt sur la bande de support sans fin (5).

5. Procédé selon l'une quelconque des revendications précédentes, **caractérisé en ce que** les structures plates superposées les unes sur les autres (9, 10, 11) présentent différentes orientations de fils de renfort.

6. Procédé selon la revendication 5, **caractérisé en ce que** les structures plates (9, 10, 11) sont déposées dans une direction différente sur la bande de support sans fin (5) pour la mise en place de différentes orientations de fils de renfort, et/ou **en ce que** le paquet de couches encore lâche est consolidé et préformé sous une pression et une chaleur, et notamment la préforme (1) ainsi formée est ensuite placée dans une chambre de moulage d'un outil d'injection (19), puis un matériau de matrice est injecté dans la chambre de moulage sous une chaleur et une pression, et durci.

7. Procédé selon l'une quelconque des revendications précédentes, **caractérisé en ce que** la bande de support sans fin (5) est un non-tissé textile, un réseau textile ou un film, et/ou **en ce que** la bande de support sans fin (5) est fabriquée en un thermoplastique, tel qu'un polyamide ou un polypropylène.

8. Procédé selon l'une quelconque des revendications précédentes, **caractérisé en ce que** la bande de support sans fin (5) comprend également des fils de renfort (7), par exemple à base de fibres de verre, ce qui permet d'obtenir une structure de renfort bicouche après le dépôt des fils de renfort sans fin.
